# EUROPÄISCHE PATENTANMELDUNG

(11) **EP 1 205 099 A1**
(43) Veröffentlichungstag der Anmeldung: **15.05.2002**
(21) Anmeldenummer: 01124185.8
(22) Anmeldetag: 11.10.2001
(51) Int. Cl.: A01D 13/00, A01D 19/02, A01D 33/00, A01D 21/04

(54) **Kartoffelerntemaschine**

(30) Priorität: 09.11.2000 DE 10055538
(71) Anmelder: Franz Grimme Landmaschinenfabrik GmbH & Co. KG., D-49401 Damme (DE)
(72) Erfinder: Kalverkamp, Klemens, 49401 Damme (DE)
(74) Vertreter: Busse, Dietrich, Dipl.-Ing.

(57) **Zusammenfassung**

Eine Kartoffelerntemaschine (1) mit einer Aufnahmevorrichtung (4) zum Aufnehmen von Kartoffeldämmen (2a; 2b; 2c) wird so ausgebildet, daß der Aufnahmevorrichtung (4) zumindest eine seitliche Zuführungseinrichtung (10; 11) zugeordnet ist, die auf einen oder mehre Kartoffeldämme (2b) derart einwirkt, daß sie zumindest in den Kartoffeldämmen (2b) enthaltenes Erntegut (12) in Richtung einer vertikalen Längsmittelebene (9) der Kartoffelerntemaschine (1) einwärts verlagert und das Erntegut (12) in dieser einwärts verlagerten Stellung der Aufnahmevorrichtung (4) zuführt

## Beschreibung

Die Erfindung betrifft eine Kartoffelerntemaschine nach Oberbegriff des Anspruchs 1.

Derartige Maschinen werden eingesetzt zum Ernten von - üblicherweise in Dämmen - angebauten Kartoffeln, wobei durch die Erntemaschine einzelne oder mehrere nebeneinanderliegende Dämme aufgenommen werden können. In jüngerer Vergangenheit wird als Abstand zwischen den Kartoffeldämmen zunehmend ein Maß von 90 cm statt der bisher weit verbreiteten 75 cm gewählt. Dadurch muß eine Erntemaschine, die die gleiche Anzahl von Dämmen wie bisher aufnehmen soll, eine größere Breite aufweisen. Dieses schafft Probleme insbesondere bei solchen Erntemaschinen, die vier parallel liegende Dämme aufnehmen sollen. Damit wird die maximal zulässige Breite einer derartigen Kartoffelerntemaschine für den Straßenverkehr überschritten. Zudem können auch Erntemaschinen, die für die Aufnahme von weniger als vier Dämmen vorgesehen sind und die auf ein Abstandsmaß von 75 cm normiert waren, nur unter erheblichem Aufwand an das neue Abstandsmaß angepaßt werden.

Der Erfindung liegt das Problem zugrunde, eine Kartoffelerntemaschine für die Ernte von insbesondere von in Dämmen mit weitem Abstand enthaltenen Kartoffeln zu verbessern.

Die Erfindung löst dieses Problem durch die Merkmale des Anspruchs 1. Hinsichtlich vorteilhafter Ausgestaltungen wird auf die Ansprüche 2 bis 13 verwiesen.

Mit der Erfindung ist es möglich, die Aufnahmevorrichtung einer Kartoffelerntemaschine in einer geringeren Breite zu halten, als der Gesamtbreite der aufzunehmenden Dämme und ihrem Abstand zueinander entspricht. Dadurch kann beispielsweise eine Erntemaschine für vier nebeneinander im Abstand von jeweils 90 cm gehaltene Dämme die in Deutschland maximal zulässige Straßenfahrzeugbreite von 3,30 m einhalten, obwohl die Dämme, die für sich schon etwa 62 cm bis 65 cm breit sind, mit ihrem Abstand von 2,70 m bereits eine Gesamtbreite von über 3,30 m aufweisen und ohne die erfindungsgemäßen Maßnahmen zudem noch außenseitige Geräteteile die äußeren Dämme einfassen würden, so daß die Gesamtbreite der Erntemaschine bei deutlich über 3,30 m läge.

Durch die Einwärtsverlagerung zumindest der in den äußeren Dämmen enthaltenen Kartoffeln, wobei die Einwärtsverlagerung die äußeren Dämme insgesamt betreffen kann, kann die Aufnahme bis auf die Breite, die etwa dem Mittenabstand der Dämme entspricht, also in diesem Fall bis etwa 2,70 m, verschmälert sein. Mit den daran außen noch anschließenden Maschinenteilen wird dann eine Transportbreite von 3,30 m unterschritten.

Wenn die Zuführungseinrichtung in einer Transportstellung näher zur vertikalen Längsmittelebene der Kartoffelerntemaschine verlagerbar ist, als sie sich in Funktionsstellung befindet, kann die Außenseite der äußeren Dämme vollständig mit in die Zuführungseinrichtung einlaufen, diese können daher in Funktion die Breite von 3,30 m überschreiten und dennoch in Transportstellung die maximal zulässige Transportbreite einhalten.

Falls Zuführungseinrichtungen symmetrisch beidseits der vertikalen Fahrzeuglängsmittelebene ausgebildet sind, kann sich der genannte Vorteil auf beide Förderseiten in gleicher Weise auswirken.

Bei Verwendung von rotierbaren Scheiben kann durch die Zuführungseinrichtung gleichzeitig ein Auflockern der äußeren Dämme bewirkt werden, so daß eine Kompression des darin enthaltenen Ernteguts - und damit die Gefahr einer Beschädigung - vermieden ist. Insbesondere gilt dies bei einer Schrägstellung der Scheiben um eine horizontale Achse derart, daß der untere Teil der Scheibe näher an der vertikalen Fahrzeuglängsmittelebene liegt als der obere Teil.

Sofern die Scheiben einen Radius aufweisen, der größer ist als die Höhe der Kartoffeldämme und die Rotationsrichtung der Scheiben der Abrollrichtung, die diese Scheibe auf dem Boden hätte, entspricht, ist gewährleitstet, daß das von der Scheibe aufgenommene Material nicht nach außen verstreut wird, sondern der Aufnahmeeinrichtung der Kartoffelerntemaschine zugeführt wird.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: den vorderen Bereich einer erfindungsgemäßen Kartoffelerntemaschine in perspektivischer Ansicht von schräg oben mit einem schematisch angedeuteten Feldabschnitt vor Aufnahme der Dämme durch die Kartoffelerntemaschine,
- Fig. 2: den Bereich nach Fig. 1 in Ansicht von vorne in Funktionsstellung zur Aufnahme von Kartoffeldämmen,

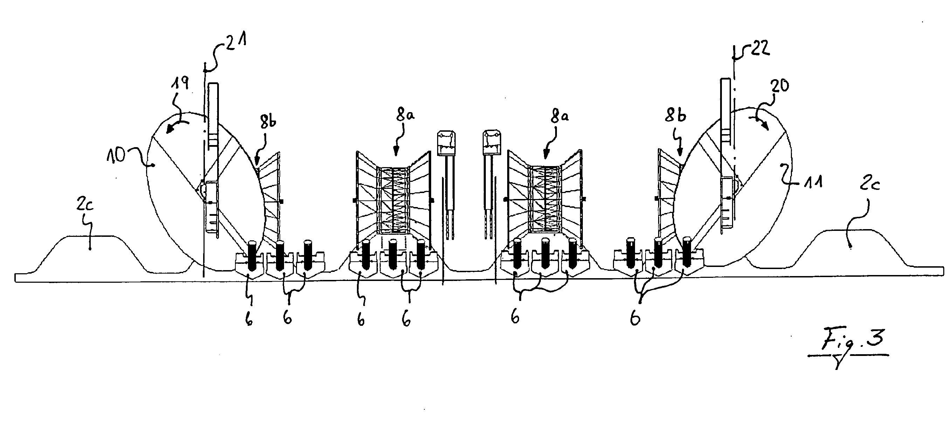

- Fig. 3: den Bereich nach Fig. 2 in Ansicht von hinten,

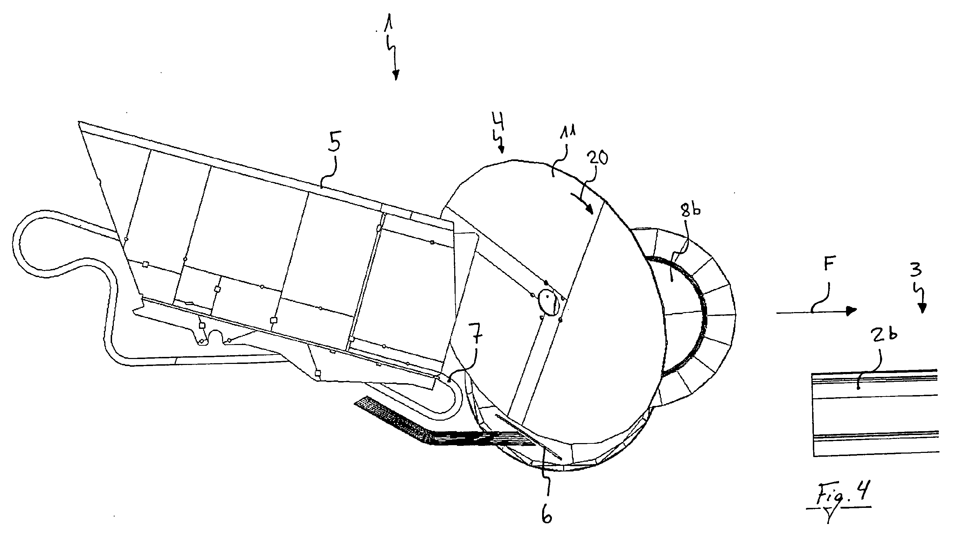

- Fig. 4: den vorderen Bereich einer Kartoffelerntemaschine in Seitenansicht,
- Fig. 5: den Bereich nach Fig. 3 in Ansicht von oben.
- Fig. 6: eine schematische Ansicht der Schrägstellung der Scheiben um jeweils eine horizontale Achse.

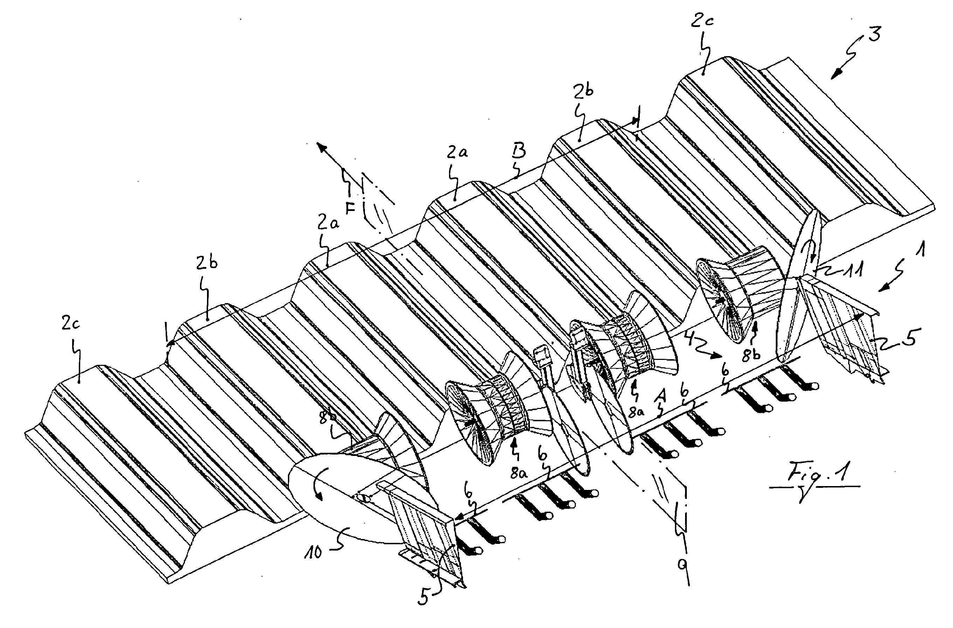

In Fig. 1 ist der vordere Bereich 1 einer Kartoffelerntemaschine dargestellt. Dieser überläuft in Funktion zumindest einen - im gezeichneten Ausführungsbeispiel vier - Dämme 2a, 2b eines Kartoffelfeldes 3. Die Dämme 2a, 2b werden gleichzeitig aufgenommen und einer Aufnahmevorrichtung 4 zugeführt, die von seitlichen Rahmenteilen 5 begrenzt ist. Die seitlichen Maschinenteile 5 weisen dabei einen Abstand A zueinander auf. Die Aufnahmevorrichtung 4 umfaßt nebeneinander angeordnete Scharen 6, die zum Untergreifen der aufzunehmenden Kartoffeldämme 2a, 2b dienen und diese einem Förderer 7 zuführen. Außerhalb der Funktionsbreite der Kartoffelerntemaschine 1 verbleiben weitere parallel liegende Dämme 2c, die bei einer weiteren Fahrt über das Feld 3 erfaßt werden können.

Den Scharen 6 können je nach Anzahl der zu erntenden Dämme 2 eine oder mehrere Dammtrommeln 8a, 8b zur Führung vorgeordnet sein, wobei die mittleren Trommeln 8a jeweils einen kreiszylindrischen und zwei seitliche kegelstumpfartig ausgebildete Bereiche aufweisen und die äußeren Dammtrommeln 8b jeweils nur einen kreiszylindrischen Bereich und einen einer vertikalen Fahrzeuglängsmittelebene 9 zugewandten Kegelstumpfbereich umfassen.

Der Aufnahmevorrichtung 4 sind in ihren seitlichen Bereichen beidseits symmetrisch zur vertikalen Längsmittelbene 9 Zuführungseinrichtungen 10, 11 zugeordnet, die in Fahrtrichtung F seitlichen Maschinenrahmenteilen 5 vorgeordnet sind und vor den Scharen 6 zur Aufnahme der Dämme 2 gehalten sind.

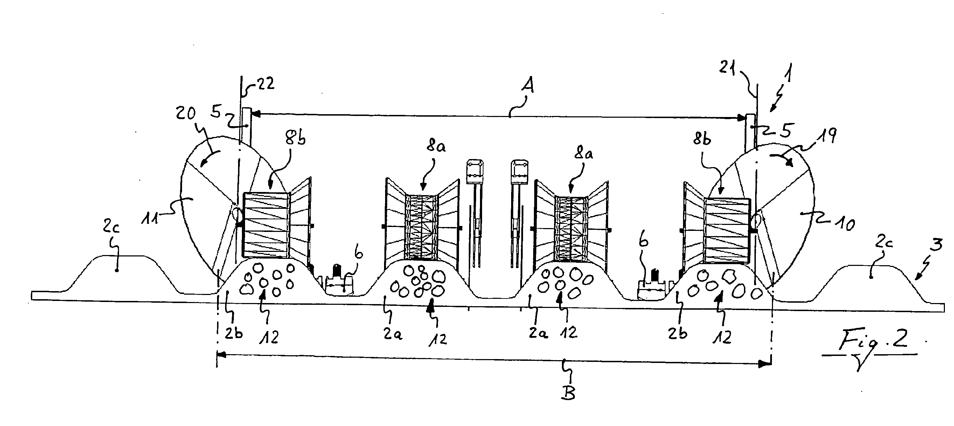

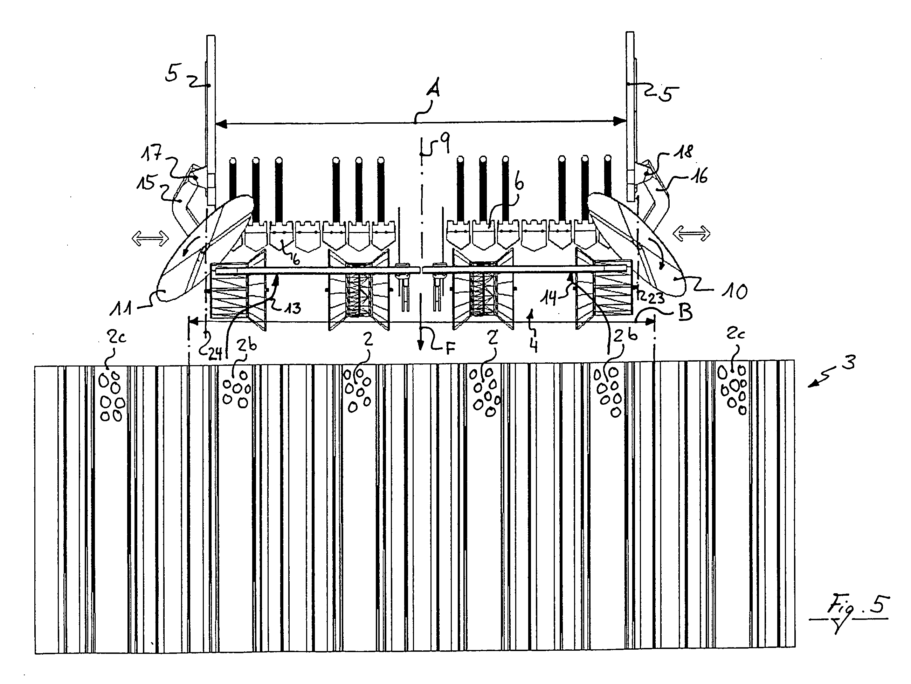

In jedem Fall bewirken die Zuführungseinrichtungen 10, 11, daß sie auf den oder die äußeren Kartoffeldämme 2b derart einwirken, daß sie darin enthaltenes Erntegut 12 (in Fig. 2 schematisch angedeutet) in Richtung der vertikalen Längsmittelebene 9 der Kartoffelerntemaschine 1 verlagern und in dieser einwärts verlagerten Stellung der Aufnahmevorrichtung 4 zuführen. Die äußeren Dämme 2b werden daher durch die Zuführungseinrichtungen 10, 11 insgesamt in Richtung der Pfeile 13, 14 derart verlagert, daß der Erstreckungsbereich der aufgenommenen Dämme 2a, 2b, der insgesamt die Bereite B einnimmt, auf die geringere Breite A der Aufnahmeöffnung 4 verkleinert wird. Hierfür werden die äußeren Dämme im wesentlichen vollständig durch die Zuführungseinrichtungen 10, 11 parallel in Richtung zur vertikalen Längsmittelebene 9 versetzt, in jedem Fall jedoch das in den äußeren Dämmen 2b enthaltene Erntegut 12. Dieses ist in Fig. 5 durch die Pfeile 13, 14 angedeutet.

Die Zuführungseinrichtungen 10, 11 sind im Ausführungsbeispiel als rotierbare Scheiben dargestellt. Sie können auch durch feste Einlaufschrägen, Einlaufkanäle o. dgl. gebildet sein. Die rotierbaren Scheiben 10, 11 als Zuführungseinrichtungen weisen einige Besonderheiten auf, auf die im folgenden eingegangen wird.

Die Zuführungseinrichtungen 10, 11 sind insgesamt derart verlagerbar, daß sie in Funktionsstellung (Fig. 5) eine größere Breite einnehmen als in Transportstellung. Hierfür sind die im Ausführungsbeispiel als Scheiben 10, 11 ausgebildeten Zuführungseinrichtungen an Auslegern 15, 16 gehalten, die ihrerseits um vertikale Achsen 17, 18 gegenüber den Maschinenrahmenteilen 5 schwenkbar sind. Somit ist die Transportbreite der Kartoffelerntemaschine insgesamt gegenüber die Funktionsbreite vermindert.

Die Zuführungseinrichtungen 10, 11 können zudem auch um ein horizontale und quer zur Fahrtrichtung F erstreckte Achse derart verschwenkbar sein, daß sie bei Auftreffen auf ein Hindernis, beispielsweise einen Stein, eine Aufwärtsbewegung durchführen, um dem Hindernis beschädigungsfrei auszuweichen.

Wie in Fig. 2 sichtbar ist, ist der Radius der Scheiben 10, 11 größer als die Höhe der Kartoffeldämme 2a, 2b, 2c. Die in Richtung der Pfeile 19, 20 umlaufenden Scheiben 10, 11 werfen somit das aufgenommene Material der Dämme 2b in eine Richtung entgegen der Fahrtrichtung F nach hinten aus. Die Scheiben 10, 11 können entweder auf dem Boden abrollen oder durch separaten Antrieb in der gleichen Drehrichtung 19, 20 angetrieben sein.

Die Scheiben 10, 11 sind um vertikale Achsen 21, 22 derart um typischerweise 30° bis 60 ° geneigt, daß sich die Breitendifferenz zwischen dem in Fahrtrichtung F vorderen Bereich und dem rückwärtigen Bereich ergibt, um damit die Einwärtsförderung entlang den Pfeilen 13, 14 der äußeren Dämme 2b zu ermöglichen. In ähnlicher Weise wären auch feste Leitbleche o. dgl. als Zuführungseinrichtungen schräg angestellt.

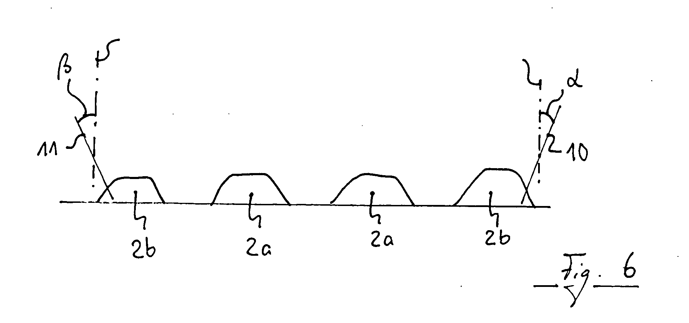

Des weiteren ist die Scheibe 10, 11 gegenüber einer parallel zur Fahrtrichtung F liegenden horizontalen Achse 23, 24 derart verkippt, daß der untere Bereich der jeweiligen Scheibe 10, 11 näher an der vertikalen Längsmittelebene 9 gelegen ist als der obere Bereich der Scheiben 10, 11. Durch diese Verkippung, die in Fig. 6 noch einmal schematisch herausgezeichnet ist und gemäß der die Scheiben 10, 11 gegenüber dem jeweiligen Lot L um den Winkel α bzw. β verkippt sind, ergibt sich ein aufnehmendes Bewegen der äußeren Dämme 2b, wodurch diese nicht komprimiert werden und dadurch eine Beschädigung des Ernteguts vermieden wird. Vielmehr findet eine Auflockerung statt, das Erntegut 12 wird herausgehoben und schon durch die rotierenden Scheiben 10, 11 teilweise von der umgebenden Erde getrennt.

Um gleichzeitig auch ein Durchtrennen von Kraut- und Queckenbewuchs zu ermöglichen, können die äußeren Ränder der Scheiben 10, 11 als glatte oder gezackte Schneidkanten ausgebildet sein. Zudem können die Ränder auch abgewinkelt sein, um somit eine besondere Stabilität der Scheiben 10, 11, die beispielsweise aus einem üblichen Baustahl bestehen können, zu erreichen.

Durch die einfördernde Wirkung der Scheiben 10, 11 ist als weiterer Vorteil der erfindungsgemäßen Kartoffelerntemaschine 1 eine größere Toleranz gegen seitliche Kursabweichungen festzustellen, da die Förderbreite, die mit den rotierenden Scheiben 10, 11 ermöglicht ist, etwas größer ist als die maximale Breitenerstreckung B der aufgenommenen Dämme 2a, 2b. Auch bei geringer Seitenabweichung der Kartoffelerntemaschine 1 werden somit die äußeren Dämme 2b noch mit aufgenommen. Um diese Möglichkeit zu erreichen, sind die äußersten Scharen 6 der Aufnahmeöffnung 4 sehr weit außen angeordnet. In jedem Fall werden daher die äußeren Dämme 2b noch vollständig aufgenommen und der Aufnahmevorrichtung 4 zugeführt.

Mit der erfindungsgemäßen Erntemaschine ist auch eine Umrüstung von beispielsweise einer zweireihigen Erntemaschine auf eine dreireihige möglich. Hierfür werden an die zweireihige Erntemaschine die rotierbaren Scheiben 10, 11 angebaut, wozu beispielsweise die Schwenkarme 15, 16 mit ihren Sockeln, die die vertikalen Achsen 17, 18 tragen, an den seitlichen Rahmenteilen 5 angeschweißt werden. Die Antriebe für die rotierbaren Scheiben 10,11 sind separat ausgebildet und jeweils als Nabenmotoren den Scheiben 10, 11 direkt zugeordnet. Durch seitliches Versetzen der Dammtrommeln 8a, 8b, was auch anhand von Stellgliedern automatisiert erfolgen kann, kann dann der Zweireiher zu einem Dreireiher umgerüstet werden, ohne die Breite der Aufnahmevorrichtung zu verändern. Die Scharen 6 können dabei ebenfalls mittels Stellgliedern verschieblich sein, oder sie können sich ohnehin über die gesamte Breite der Aufnahmevorrichtung erstrecken. Der Umrüstaufwand zur Vergrößerung des effektiven Aufnahmebereichs einer Kartoffelerntemaschine ist daher durch die erfindungsgemäßen Zuführungseinrichtungen 10, 11 minimiert. Ebenso kann ein Einreiher zu einem Zweireiher umgerüstet werden.

Der Durchmesser der Scheiben ist etwa zwei- bis sechsmal so groß wie die Höhe der Dämme 2a, 2b, 2c. Er beträgt typisch etwa einen Meter.

## Patentansprüche

1. Kartoffelerntemaschine (1) mit einer Aufnahmevorrichtung (4) zum Aufnehmen von Kartoffeldämmen (2a; 2b; 2c), **dadurch gekennzeichnet, daß** der Aufnahmevorrichtung (4) zumindest eine seitliche Zuführungseinrichtung (10; 11) zugeordnet ist, die auf einen oder mehre Kartoffeldämme (2b) derart einwirkt, daß sie zumindest in den Kartoffeldämmen (2b) enthaltenes Erntegut (12) in Richtung einer vertikalen Längsmittelebene (9) der Kartoffelerntemaschine (1) einwärts verlagert und das Erntegut (12) in dieser einwärts verlagerten Stellung der Aufnahmevorrichtung (4) zuführt.

2. Kartoffelerntemaschine Anspruch 1, **dadurch gekennzeichnet, daß** die Zuführungseinrichtung (10; 11) zwischen einer Funktionsstellung und einer Transportstellung derart beweglich ist, daß sie in Transportstellung gegenüber der vertikalen Fahrzeuglängsmittelebene (9) einen geringeren Abstand aufweist als in Funktionsstellung.

3. Kartoffelerntemaschine nach Anspruch 1, **dadurch gekennzeichnet, daß** der Aufnahmevorrichtung (4) beidseits der vertikalen Fahrzeuglängsmittelebene (9) Zuführungseinrichtungen (10; 11) zugeordnet sind.

4. Kartoffelerntemaschine nach einem der Ansprüche 1 bis 3, **dadurch gekennzeichnet, daß** jede Zuführungseinrichtung (10;11) an einer beweglichen Halterung angeordnet ist, die deren vertikales Ausweichen aus der Funktionsstellung bei Auftreten von Hindernissen ermöglicht.

5. Kartoffelerntemaschine nach einem der Ansprüche 1 bis 4, **dadurch gekennzeichnet, daß** jede Zuführungseinrichtung (10; 11) zumindest eine rotierbare Scheibe umfaßt.

6. Kartoffelerntemaschine nach Anspruch 5, **dadurch gekennzeichnet, daß** der Radius der Scheibe (10; 11) größer ist als die Höhe der Kartoffeldämme (2b).

7. Kartoffelerntemaschine nach einem der Ansprüche 5 oder 6, **dadurch gekennzeichnet, daß** die rotierbare Scheibe (10; 11) über einen Antrieb rotationsbeweglich ist.

8. Kartoffelerntemaschine nach einem der Ansprüche 5 bis 7, **dadurch gekennzeichnet, daß** die rotierbare Scheibe (10; 11) zumindest in Funktionsstellung derart um eine vertikale Achse (21; 22) geneigt ist, daß sich der in Fahrtrichtung der Kartoffelerntemaschine vordere Bereich der Scheibe gegenüber der vertikalen Fahrzeuglängsmittelebene (9) weiter auswärts befindet als der in Fahrtrichtung hintere Bereich.

9. Kartoffelerntemaschine nach einem der Ansprüche 5 bis 8, **dadurch gekennzeichnet, daß** die Scheibe (10; 11) um eine horizontale Achse (23; 24) derart geneigt ist, daß ihr unterer Bereich gegenüber der vertikalen Fahrzeuglängsmittelebene (9) in einem geringeren Abstand gehalten ist als ihr oberer Bereich.

10. Kartoffelerntemaschine nach einem der Ansprüche 5 bis 9, **dadurch gekennzeichnet, daß** die Rotationsrichtung (19; 20) der Scheibe(n) (10; 11) der Abrollrichtung einer derartigen Scheibe auf dem Boden entspricht.

11. Kartoffelerntemaschine nach einem der Ansprüche 5 bis 10, **dadurch gekennzeichnet, daß** die Scheibe (10; 11) als Schneidscheibe ausgebildet ist.

12. Kartoffelerntemaschine nach einem der Ansprüche 5 bis 11, **dadurch gekennzeichnet, daß** der Randbereich der Scheibe (10; 11) abgewinkelt ist.

13. Kartoffelerntemaschine nach einem der Ansprüche 1 bis 12, **dadurch gekennzeichnet, daß** die Kartoffelerntemaschine (1) zur Aufnahme von vier parallelen Kartoffeldämmen (2a; 2b) vorgesehen ist.
